# EUROPEAN PATENT SPECIFICATION

(11) **EP 2 920 381 B1**
(45) Date of publication and mention of the grant of the patent: **13.02.2019**
(21) Application number: 13843805.6
(22) Date of filing: 03.10.2013
(51) Int. Cl.: E04C 1/40, C03B 19/08

(54) **COMPOSITE BUILDING BLOCK**
VERBUNDBAUSTEIN
BLOC DE CONSTRUCTION COMPOSITE

(30) Priority: 05.10.2012 DK 201270608
(43) Date of publication of application: 23.09.2015
(73) Proprietor: A/S Graasten Teglværk, 6300 Graasten (DK)
(72) Inventor: Bendtsen, Jacob Hallum, DK-6400 Sønderborg (DK)
(74) Representative: Olesen, Birthe Bjerregaard
(86) International application number: PCT/DK2013/050314
(87) International publication number: WO 2014/053144

(56) References cited:
- EP-A1- 1 396 589
- EP-A1- 1 724 242
- DE-A1- 3 530 138
- DE-A1- 3 603 968
- DE-A1-102005 008 200
- GB-A- 1 431 086
- US-A- 4 359 548

## Description

### Field of the Invention

The present invention concerns a combined building block, wherein the building block includes at least one insulating part, the insulating part provided with at least two side faces with a length and a height, two abutment faces with a height and a width, and two bearing faces with a length and a width, wherein at at least one side face is fixed a substantially maintenance-free facing part of brickwork, wherein the insulating part is constituted of cellular glass.

The invention also concerns a method for producing a building block with an insulating part and with one or more facing parts, the insulating part constituted of cellular glass, wherein the insulating part of a building element is provided by a method that at least includes the following steps:
- providing a mould, preferably a mould which can be opened and closed;
- arranging an adjusted amount of glass meal in the mould;
- additionally arranging an adjusted amount of foaming agent, for example chalk, carbon and/or manganese oxide, in the mould;
- placing the mould in an oven, thereby heating the mould to a temperature between 700 and 850°C, preferably to a temperature of about 750°C;
- establishing a pressure in the mould at least deviating from atmospheric pressure, preferably by at least 1%, by at least 10%, by at least 20%, by at least 40%, by at least 60%, by at least 80%, by at least 120%, by at least 200%, or more, relative to the atmospheric pressure.

### Background of the Invention

It is commonly known to make cellular glass for application in building constructions in the form of plates which, according to application, are adapted in size with suitable tools. Cellular glass is frequently used due to its carrying capacity, and not the least due to its tightness against water. These properties have resulted in that cellular glass over some time has found application in connection with erection of buildings or parts of buildings where more stringent requirements are demanded as to the moisture-related properties of materials. Cellular glass has, in addition to high water and vapour tightness, good chemical resistance, why it is often used in so-called "wet" industries, in the textile and paper industry as well as in breweries, abattoirs and dairies. Also, cellular glass has found application in connection with building of basements, in particular basement garages. However, there exists no tradition of using cellular glass as a more widely used building material in connection with erection or energy renovation of housing or other building.

As known and used today, cellular glass is as mentioned typically made as plates but is also used in the form of pebbles for filling along foundations and under floors prior to concreting.

Cellular glass is made of glass meal, which for the greater part is formed of used car panes, television tubes and cathode-ray tubes and other glass not readily recycled for more profitable purposes. The glass meal is mixed with carbon and possibly several other foaming agents where the foaming agent when heated causes foaming of the glass, thereby forming the characteristic closed cells. Glass meal and foaming agent are placed and baked in open moulds in large ovens with continuous flow. The moulds are typically open at one side and typically made of a suitable kind of stainless steel or other material having the required releasing effect so that the cellular glass can be demoulded without difficulty.

When the cellular glass is formed by foaming, it expands over the mould and looks most of all like a bread baked in a baking tin. After that, the cellular glass plate is trimmed/adapted on the upward facing surface, and usually the other faces as well, in order thereby to achieve a dimensionally fixed item that may form part of a building element together with other building elements of the same type.

By the prior art types of cellular glass there is thus a need for performing up to a plurality of processes after formation of the block of cellular glass in an oven with continuous flow. The trimming or cutting of the cellular glass block produces a residue which can be recycled but which, all things considered, applies an extra cost to the end product, as redundant and discarded cellular glass requires some energy before it can be reused.

EP1396589A and DE 3530138 A each describe variants of a building block comprising a foam glass insulating part and facing parts attached to the side faces of the foam glass.

GB 1431086 A discloses a mould for making foam glass panel attached to a sheet of glass ceramic, where the mould has a lid which can be opened or removed. The sheet of glass ceramic is put into the mould, then glass powder and foaming agent are added and the closed mold is heated to about 850"C. Because of the available volume, the foaming glass will exert pressure on the glass ceramic and will be joined to it. The obtained product is a combined element which can be used for building, and comprises an insulating part of foam glass having a plate shape and a facing part attached to one side of the foam glass plate.

### Object of the Invention

It is the object of the invention is to indicate a method for producing a building block/element that includes an insulating part of cellular glass, wherein such a building block/element has good insulating capability, and at the same time a carrying capacity which is sufficient to form part of a bearing building construction.

### Description of the Invention

As mentioned in the introduction, the invention concerns a combined building block/ composite building element wherein the building block includes at least one insulating part, the insulating part provided with at least two side faces with a length and a height, two abutment faces with a height and a width, and two bearing faces with a length and a width, wherein at at least one side face is fixed a facing part of brickwork, wherein the insulating part is constituted of cellular glass.

The building block is special in that comprises joining means for joining to adjacent building block(s), where said joining means includes a projection at at least one edge between a facing part and a first bearing face which has a height and a thickness and a recess at at least at one edge between a facing part (6) and a second bearing face (5), which recess has a height and a depth, and/or that the joining means includes a projection at at least one edge between a facing part and a first abutment face which projection has a height and a thickness and a recess at at least at one edge between facing part and a second abutment face (4), which recess has a height and a depth.

The new feature of a building block/element according to the invention is that at least one abutment face and a bearing face on the combined building block are machined after formation of at least the insulating part, whereby one or more abutment faces and/or bearing faces appear with a given geometry. Such a given geometry may e.g. be a kind of projections or recesses allowing the individual building blocks to be disposed at a more or less given position in relation to the other building blocks. This geometry can be formed in the insulating part as well as in one or two facing parts joined with the insulating part.

In a variant of a combined building block according to the invention, at at least one edge between a facing part and an abutment face and/or a bearing face the building block can include a projection which has a height and a thickness. That may be a projection on one or two edges wherein the projection can be 5 mm wide and 3 mm high, providing that the projection will cover the glue joint between two adjacent building blocks.

In another variant of a combined building block according to the invention, at at least one edge between a facing part and an abutment face and/or a bearing face the building block can include a recess which has a height and a depth. It may be a recess on one or two edges wherein the recess can be 8 mm deep and 8 mm high, providing that the recess together with the projection appear as a visible joint between two adjacent building blocks.

A building block can e.g. include an insulating part of foamglass where a facing part of brickwork is mounted on one or two side faces. The facing part can e.g. be 4 cm thick and with a length of 45 cm and a height of 10 cm. Between such two facing parts the insulating parts are then arranged in permanent connection with the facing parts, and the joined parts thus constitute a joined building block which includes the facade/facing, the inner lining and insulating parts in one assembled unit.

In order to attain good insulation capability and at the same time an attractive appearance, there are some challenges which are easily solved with a building block according to the invention. For example, there is a desire for as narrow joint as possible between adjacent building block as it otherwise influences the insulation capability. The joint will therefore typically be effected by a relatively thin glue joint. In order to hide this glue joint and to achieve as uniform wall construction as possible, the building block may advantageously be machined such that its dimensions are within a modest tolerance. By working e.g. the two bearing faces, the thickness can be made exact, and the length can be made exact as well by working the abutment faces.

In a particularly preferred variant, a machined adaptation of the building block can be performed on the bearing faces and, if so desired, on the abutment faces as well, e.g. by grinding or milling, in such a way that a recess and a projecting edge, respectively, are formed. When the building blocks are stacked, the projecting edge will extend down in or into the recess of an adjacent building block. Hereby, several advantages are achieved. The characteristic expression of a brick façade with joints between the individual building blocks is achieved, and not the least the advantage of the glue joint being hidden by the projecting edge.
The fact that the narrow glue joint is concealed implies several advantages, e.g. the glue joint can be made of a material with a characteristic colour without showing, and the glue joint can be protected against weather and wind in this way, if necessary.

A combined building block/element according to the invention may include that a sealant tape, e.g. and elastic sealant tape, is arranged in a recess and/or on a projection, where the sealant tape fills the joint formed between projection and recess when two building blocks are adjacently arranged. While building a wall construction with building blocks according to the invention, possible excessive glue which by the laying is pressed out into the recess can easily be wiped away by a wet sponge or similar immediately after gluing. Alternatively, a kind of sealant tape filling the spacing between recess and edge and which subsequently can be removed can be mounted in the recess and/or on the projecting edge. By such a solution with a sealant tape, it is safeguarded that no glue comes out on the visible edges in the joint between two building blocks.

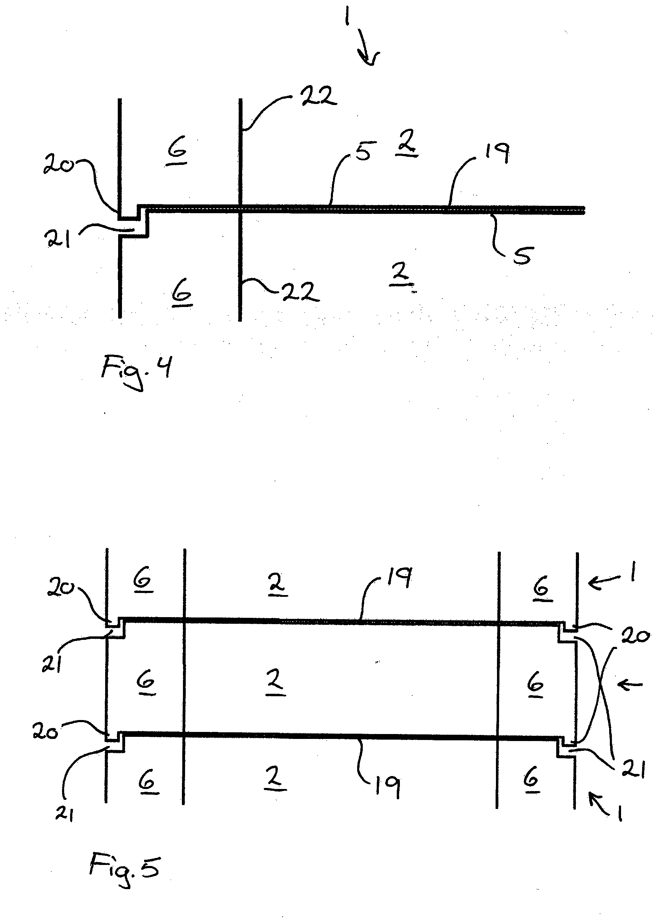

In an embodiment, a recess along the edge between the front side of a facing part and e.g. a bearing face and between a front side on a facing part and an abutment face can be 8 x 8 mm. In the same embodiment, a projection along the edge between the front side of a facing part and e.g. a bearing face and between a front side on a facing part and an abutment face can be 3 mm high and 5 mm wide. This will appear in more detail from the description of Figs. 4 and 5 below.

A building block can be built up of an insulating part and one or two facing parts that are glued on the insulating part by a suitable glue, and wherein subsequently there is performed a machining of the building blocks. However, it may also be envisaged that respective parts are joined by gluing or similar after individual machining, or at least after individual partial machining. Such a machining can e.g. be provided such that the insulating part is machined on selected faces and then joined with either a corresponding machined facing part or a facing part having achieved its final geometry during the formation itself of the facing part. It may thus be individually produced products that are joined subsequently.

The material used for gluing between facing part and insulating part may advantageously have an elasticity that will accommodate the difference possibly occurring in the thermal expansion coefficients of respective materials. Such a layer can be called a buffer layer that may absorb/handle the various material properties, and which, if so, also can act as insulation, for example in relation to the facing part.

A building block/a building element according to the invention can be made such that the insulating part includes joining means for joining with further insulating parts on adjacent building blocks. Thus a building block can be laid upon another building block and joined with the latter by a method suited for the purpose.

Such joining means can include corresponding longitudinal, transverse or oblique joining means which may include recesses and corresponding projections - see below for more.

Moreover, an advantage of working a foamed insulating part is that such items have a tendency of having a reduced insulating capability in the surface itself, which can be countered by working this part of the item by removing the original surface and thereby achieve an increased and high insulating capability of the building block.
Cellular glass products typically consist of glass and one or more foaming agents, providing stability in constructions, high insulating ability and a thermal expansion coefficient which is compatible with steel, concrete and brickwork. Cellular glass is typically used as insulation to which extraordinary demands are made to moisture properties and, not the least, compression strength. Cellular glass can be provided with a compression strength up to 1600 kPa which is more than enough to absorb the loads e.g. applied on a wall by a roof construction.

Cellular glass is a high quality product with a thermal conductivity at level with traditional insulation of rock wool and glass wool. The declared thermal conductivity of cellular glass as we know today lies in the range 0.038 - 0.050 [W/mK], depending on application and strength requirements, and corresponds substantially to the thermal conductivity of rock and glass wool. Due to its rather unique properties, cellular glass is a good energy efficient solution for thermal bridge interruption in common buildings and in connection with heavily loaded constructions. This is because cellular glass has relatively high insulation capability while at the same time having a load-bearing capacity which allows it to form part of the load-bearing parts of the construction.

It will even be possible to make cellular glass with even lesser thermal conductivity or, in other words, with even better insulating properties. By increasing the development of gas in connection with the foaming of cellular glass such that the cells can be produced with larger size and by letting the glass harden with these larger cells, the density can be lowered to a level which still has the desired load-bearing capability, and at the same time lower the thermal conductivity to e.g. between 0.025 and 0.035 [W/mK], lowering the curve for the U-value as well such that a typical U-value by a cellular glass thickness of 300 mm will be between 0.08 and 0.12 [W/m²K].

Cellular glass can immediately replace more traditional insulation materials while at the same time the glass of which it is produced advantageously can be waste glass which is crushed to a form of glass meal and thus reused. The glass can e.g. be from old car panes, television tubes from TV screens, wine bottles or other glass which cannot readily be reworked in an advantageous or economical defensible way. This type of glass which is particularly suited for production of cellular glass but which for different reasons cannot readily be reused for other purposes, is typically transported to and stored in depots, e.g. in lime mines, which obviously results in substantial costs. Furthermore, such a solution can hardly be called a sustainable solution either.

By a combined building block according to the invention it is thus possible to achieve a façade or facing which is entirely unchanged compared what we know, but at the same time is achieved an insulation layer which not only insulates, but also forms part of the construction itself as a load-bearing element. When it is possible with an insulating part to attain the desired and advantageous insulating capability as well as using the insulating part as a load-bearing or part of a load-bearing wall, then the load-bearing capability in the traditional load-bearing wall, namely the back wall can be reduced, providing several advantages.

If a typical cavity wall construction with a building envelope and a back wall of bricks, each with a thickness of 11 cm, where between these layers a rock wool or glass wool insulation of 24 cm is arranged, is substituted by a building envelope and a back wall of e.g. half the dimension and an insulation layer of cellular glass having increased thickness corresponding to what is saved on building envelope and back wall, it is achieved that the insulation becomes 35 cm thick. By this solution it may then be possible to maintain the same wall thickness, achieve increased insulating capability [W/mK] and thereby also a lower U-value [W/m²K], and not the least to achieve either the same or even greater load-bearing capability in the finished wall. At the same time is achieved a practical, sustainable and defensible recycling of glass which otherwise entirely or partially would be referred to deposition.

A combined building block/element according to the invention can be made such that the joining means on an insulating part include one or more recesses and/or projections at one or more faces, wherein the recesses and/or projections correspond to one or more recesses and/or projections at one or more surfaces on an adjacent building block.

Without, but particularly with such joining means, e.g. in the form of recesses or projections on the building blocks, it is possible to construct a wall with at least insulation and building envelope, which is formed by the facing parts, in a single work procedure. If the building blocks or building elements are stacked and locked/fixed to each other in a suitable way, the building envelope, insulation and back wall can all be established at once.

By providing the individual building blocks or building elements with corresponding joining means there is achieved a simple structure which in principle can be compared with the way in which traditional Lego™ blocks are joined. When the finished wall construction has been erected, the roof construction, or whatever to be mounted on the wall, is mounted, and the load is absorbed by building envelope, insulation as well as back wall. Alternatively, either the building envelope or the back wall can be left out of the load-bearing construction, of course depending on the actual choice of material. If bricks are used for the building envelope as well as for back wall, both may right away be included as load-bearing elements when pointing has been performed between the individual facing parts/bricks, whether they are at the outer or at the inner side of the wall construction.

In a variant of a combined building block according to the invention, the joining means on an insulating part may include one or more recesses or through-going holes, preferably recesses/holes extending from a bearing face and towards another bearing face on a building block, wherein the recesses/holes are arranged systematically in the bearing faces on a building block whereby two building blocks can be disposed in at least one position over each other, where at least one of the recesses/holes in each of the two building blocks are over each other as well. A building block can thus be made with e.g. one, two, three, four or more sets of recesses/holes such that a traditional architectural expression with brickwork in various bond types can be achieved.

When the recesses/holes are over each other, these may advantageously be fixed by an assembly element, e.g. a dowel, which is fitted in the recesses or holes. For example, a dowel can be provided in a recess and extend into a corresponding recess in another building block. Another possibility is that a dowel extends through a building block and down into the underlying block, and even down into a layer of building blocks even farther down in the wall construction. The dowel thus possibly extends through two, three or more courses.
Joining of a building block or a building element according to the invention may in a simple form readily be fixed to one or more underlying blocks or elements in that a nail or similar is knocked down through the building block, something which can be done manually or by a mechanical, electric or pneumatic tool adapted for the purpose. Such a nail can be of steel or other suitable metal but it may also be of plastic or e.g. a suitable fibre-reinforced composite material.

In a variant of a combined building block/element according to the invention, the facing part is constituted by at least one brick, wherein the at least one brick is permanently fixed to the insulating part by physical engagement.

A building block according to the invention may also be with a facing part fixed to both sides of the insulating part which then, when building with such a building block, corresponds to a traditional fully bricked wall construction where a brick wall is provided externally as building envelope and also internally as back wall. To a great extent is hereby achieved the same good effect with regard to moisture and temperature which are stabilised by using brickwork, contributing to a good, comfortable and healthy environment.

A combined building block/element according to the invention can be made such that the facing part includes a back side with jointing means in the form of recesses and/or projections, where the projections are made with decreasing cross-sectional area as seen from the back side and into the facing part, and where the recesses are made with an increasing cross-sectional area as seen from the back side of the facing part and towards the bottom of a recess.

Such recesses or projections can advantageously be dovetailed as known from other types of joints, providing a good and secure jointing. Such dovetails or other suitable types of projections or recesses may advantageously be formed transversely of a brick shell as this will provide an easier demoulding during the production process. However, it is also possible to have these recesses or projections longitudinally or, for that matter, in one or more arbitrary directions.
The area on the back side of the facing part can also be increased in other ways such that the facing part is brought to engage the insulating part. Irrespective of the choice of joining means, this can possibly be established in that one or more facing parts are placed in a mould, after which the insulating part is formed by foaming of glass meal which thus adheres/is bonded to the back side of the facing part, partly in the recesses or projections and partly in the porous surface on the back side of a facing part of brickwork.

A building block or a building element according to the invention can also be provided as an element larger than a traditional brick. For example, this may be an element with a width of 120 cm and height of 250 cm and provided with a number of facing parts, e.g. mantles of brickwork.

There is described a mould for making a combined building block/element produced according to a method as described above. The mould is a closed mould with a number of side faces, e.g. with six side faces, corresponding to making a combined building block/element with rectangular cross-section, wherein one or more of the mould sides can be opened and/or removed in connection with demoulding, wherein at least one of the sides of the mould includes a valve being a pressure regulating valve, the valve adapted with means either allowing a certain overpressure or a certain underpressure in the mould. The sides can be hinged to each other such that a mould e.g. can be constructed as a bottom plate on which four sides are hinged and where the mould is closed by e.g. a top plate. By providing the mould according to the invention with a pressure regulating valve, that being an underpressure valve or an overpressure valve, there is achieved the possibility of controlling the pressure in the mould during the foaming process as well as during the heating and cooling process.

The valve can be a simple spring-biased valve which in principle is self-controlling, but a pressure regulating valve allowing individual temperature- and/or time-dependent regulation can be used as well. For example, a given pressure can be allowed in the mould during heating and a first part of the foaming process, whereas another pressure is maintained during a second part of the foaming process, and a third pressure is maintained during the cooling process. Also, a pressure regulating valve is controlled associated with the supply of one or more gases to the mould, simultaneously or in a suitable sequence, during the heating, foaming and cooling steps, respectively.

As mentioned in the introduction, the invention also concerns a method for making a building block with an insulating part and with one or more facing parts, the insulating part constituted of cellular glass, wherein the insulating part of a building element is provided by a method that at least includes the following steps:
- providing a mould, preferably a mould which can be opened and closed;
- arranging an adjusted amount of glass meal in the mould;
- additionally arranging an adjusted amount of foaming agent, for example chalk, carbon and/or manganese oxide, in the mould;
- placing the mould in an oven, thereby heating the mould to a temperature between 700 and 850°C, preferably to a temperature of about 750°C;
- establishing a pressure in the mould at least deviating from atmospheric pressure, preferably by at least 1%, by at least 10%, by at least 20%, by at least 40%, by at least 60%, by at least 80%, by at least 120%, by at least 200%, or more, relative to the atmospheric pressure.
The new feature of a method according to the invention is that the method includes arranging one or more facing parts in a mould at at least one side of the mould, where subsequently an insulating part is foamed, the foaming of the insulating part bringing the insulating part in contact with and bearing on the facing parts, which are thereby joined with the insulating part.

The method is further special in that the at least one projection(s) and the at least one recess(es) on the at least one edge of the bearing faces of the facing part or on the at least one edge of the abutment faces of the facing part are formed by machining of the bearing faces or the abutment faces, respectively.

Hereby is achieved a building block with one or more facing parts which in principle are ready to form part of a brick construction. The case may be here that the facing parts are shells of brickwork, e.g. with a thickness of a few centimetres, whereby a wall construction with traditional brickwork appearance can be achieved with substantially increased insulating capability, without the wall needing to be unreasonably thick.

The joint between a facing part and an insulating part can e.g. be effected by arranging a suitable kind of adhesive on the facing part, thus joining the parts when they come into mutual contact.

The temperature used in the oven may in some cases where the pressure in the oven and/or in the mould is markedly different from atmospheric pressure vary within a greater interval than given above, why temperatures from 600 and up to 1000°C can be applied.

The mould may advantageously be designed as a closed mould such that the insulating part/the building element has certain and uniform outer dimensions and shape. The mould may advantageously be made of stainless steel so that the mould can remain stable during the heating of glass meal and foaming agent, but also to provide a sufficiently smooth surface such that demoulding can be performed in an easy and simple way.

The glass meal used for making building blocks/elements is typically glass meal of recycled glass with addition of chalk and/or activated carbon, or other suitable foaming agent which by heating causes the glass meal to foam into the mentioned mould, thus forming a block of cellular glass where the cells are filled with a gas, preferably CO₂. Manganese oxide may advantageously be used as at least part of the foaming agent, as it entails forming more CO₂ during foaming of the cellular glass blocks.

The glass meal can be supplied to the mould as a loose powder together with a foaming agent, but can also be added to the mould as a compressed block in which the foaming agent is contained as well. Possibly more than one block can be put into the mould where individual blocks with glass meal and foaming agent can be of different adapted sizes.

By regulating the air pressure in the oven relative to the atmospheric pressure, an increased possibility of influencing the size of respective cells and to some degree the gas content, including CO₂, argon, krypton, or other suitable gas with good insulating properties. The size of the cells and the contents thereof are critical to the insulating capability, but it is obvious that there is always a balance between insulation capability and carrying capacity in a building block of cellular glass, as large cells filled with a suitable gas provide a well-insulated product while at the same time the carrying capacity is inferior to that of a building block with smaller cells and thereby with more glass.

By foaming in a mould or in an oven with an underpressure or negative pressure relative to atmospheric pressure, larger cells can be formed in the cellular glass, providing improved insulation capability, while an overpressure relative to atmospheric pressure causes formation of smaller cells. The size of an underpressure and/or an overpressure is adjusted according to need, but as mentioned it can be very small or more marked relative to the atmospheric pressure.

Furthermore, it can be possible to regulate between e.g. an underpressure and an overpressure during the foaming process whereby the cell formation in a building block of cellular glass can be controlled and adapted to specific needs.

Similarly, it may be advantageous to perform the foaming under higher pressure than the pressure maintained in the mould and/or in the oven during the cooling process, whereby the formed cells can be maintained in the desired size instead of either collapsing or flowing together with adjacent cells. If adjacent cells flow together, the strength properties may be impaired, and the insulation properties may be influenced by this as well.

Another detail that may be addressed during the making of building blocks of cellular glass is the cooling process itself after foaming and formation of the cellular glass, as during cooling an underpressure can be built up in the cells whereby the insulation capability is improved. However, only if it is really possible to maintain the cells which as mentioned tend to collapse by insufficient control of the cooling process.

As indicated above, a method according to the invention may include that during the heating of the mould and thereby of the glass meal and foaming agent there is supplied a gas which thereby entirely or partially fills the closed cells formed in the insulating part and which is thus contained in the finished cellular glass element. Such a gas can be built into the glass meal/foaming agent in solid form which by heating is gasified, but which can also be supplied in liquid or gaseous form, whereby the supplied amount and, not the least, the time for the addition can be adjusted and regulated. For example, the chosen gas or gases can be generated or added such that during foaming of the glass, they mix with the generated CO₂ and more or less displace the latter from the interior of the cells. In this connection, argon or krypton can be used with advantage.

During heating, the glass meal and the foaming agent will go through a chemical process where gases are generated and thus more or less lift and form countless cells in the fluid glass mass. Before, during and after foaming, one or more other gases can be supplied to the mould, and the time relative to foaming and cooling for such gas supply is chosen according to the desired result. Also, the amount of supplied gas and pressure conditions in the mould/oven can be regulated concurrently throughout the process. As an example it can be mentioned that argon can be supplied with 4 litres per minute with the wanted effect on the process and the finished product.

For example, it may also be an advantage to establish a given atmosphere in the mould before foaming, during foaming and during cooling, which can be established by displacing the atmospheric air to a given extent and possibly substitute this with a different gas. It can be e.g. with CO₂, argon or krypton.

The atmosphere in a mould or in an oven may thus be adapted to specific parameters and may e.g. include an atmosphere low in oxygen and/or an inert atmosphere, where the inert atmosphere can be a nitrogen atmosphere.

In a preferred embodiment according to the invention, the mould can be closed during the foaming, thus surrounding the insulating part of cellular glass on all sides. An insulating part or a building block can hereby be formed with fixed outer dimensions such that it can form part of a wall construction as known with bricks and other types of building blocks, in that these are joined in suitable way, e.g. with breaking joint.

In another preferred method according to the invention, at least the formed insulating part of cellular glass can be adapted in size and shape after formation and possibly in relation to one or more facing parts that are connected with the insulating part. An insulating part can then be made with a given oversize and then be adapted precisely to the preferred dimensions. Possible irregularities in the surface can hereby be removed by grinding, milling or by another suitable machining process. The removed material can e.g. be reused for moulding further insulating parts of cellular glass after pulverization into glass meal.

In yet a preferred method according to the invention, one or more facing part can be adapted in size and/or shape after joining with the insulating part, which will be discussed in detail below.

A method according to the invention includes that in the mould, alternatively in the oven as well, there is established an underpressure relative to atmospheric pressure, wherein the underpressure is at least 1%, at least 10%, at least 20%, at least 40%, at least 60%, at least 80%, or more, lower than the atmospheric pressure. Hereby is achieved the advantage that the cells in the cellular glass become larger, thereby increasing the insulating capability as there is less structural material - glass - to conduct the heat through the insulating part.

A further method according to the invention includes that in the mould, alternatively in the oven as well, there is established an overpressure relative to atmospheric pressure, wherein the overpressure is at least 10%, at least 20%, at least 40%, at least 60%, or at least 80%, at least 120%, at least 200%, or more, higher than the atmospheric pressure. By this variant of a method according to the invention, the insulating part is made of cellular glass at overpressure, thereby attaining smaller cells, and where the use of argon or krypton becomes even more relevant since a gas is present in the cells as opposed to a building block where the cells are more or less empty of air/gas. Cellular glass has airtight cells, and a lower pressure exists in the individual cells when produced with underpressure, providing insulation, whereas in cellular glass produced with overpressure, there are more gasfilled cells, why a gas with lower thermal conductivity than atmospheric air and/or CO₂ is preferable.

### Description of the Drawing

The invention is described in the following with reference to the drawing, wherein:
Fig. 1 (not according to the invention) shows an isometric view of a building block.
Fig. 2 (not according to the invention) shows a building block with mechanical locking between facing part and insulating part.
Fig. 3 shows a diagram of U-value in relation to thickness of three different insulating materials.
Fig. 4 shows a detail between a variant of two building blocks in cross-section.
Fig. 5 shows a cross-section of a part of a wall construction.

In the explanation of the Figures, identical or corresponding elements will be provided with the same designations in different Figures. Therefore, an explanation of all details and reference numbers will not necessarily be given in connection with each single Figure or embodiment.

### List of reference numbers

- 1: building block/building element
- 2: insulating part/insulation
- 3: side face on insulating part
- 4: abutment face on insulating part
- 5: bearing face of insulating part
- 6: facing part
- 7: joint between facing parts
- 8: bearing face on facing part
- 9: abutment face on facing part
- 10: internal corner on facing part
- 11: back side on facing part
- 12: recess on back side of facing part
- 13: projection on back side of facing part
- 14: X-axis
- 15: Y-axis
- 16: curve for mineral wool
- 17: curve for cellular glass
- 18: curve for Koolterm K8
- 19: glue joint
- 20: projections
- 21: cutout
- 22: joint between facing part and insulating part

### Detailed Description of Embodiments of the Invention

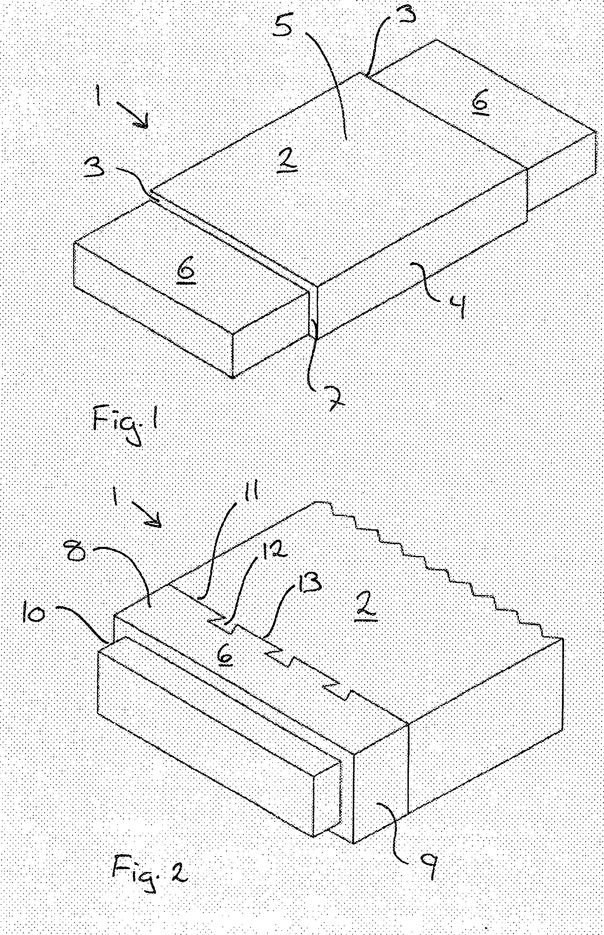

Fig. 1 shows an isometric view of part of a building block 1 wherein an insulating part 2 with two opposing side faces 3, two opposing abutment faces 4 and two opposing bearing faces 5 are seen mounted with a facing part 6 at each of the two side faces 3. The facing part 6 is here constituted by a whole brick 6 but may readily be constituted by half a brick, a facing/shell of bricks, or of other suitable material. As mentioned above, there are however some attractive benefits associated with using bricks, both with regard to the architectural expression in the building and with regard to properties outside as well as inside.

It appears from Fig. 1 that the facing part 6 has lesser extension than the side face 3 on the insulating part 2, providing the option of a joint 7, e.g. of mortar or other cement-based product, between respective adjacent facing parts 6 which then, together with the insulating part 2, also can transmit loads from a not shown roof construction or similar. After pointing with a suitable material between respective facing parts 6, the latter will in principle constitute a building envelope with properties in line with the properties of a traditional building envelope of brickwork.

In the shown variant, a facing part 6 is disposed flush with both the lower bearing face 5 of the insulating part and with an abutment face 4. The joint 7 is thus formed by the gap existing between the facing part 6 and the opposing faces of the insulating part. The facing part 6 may, however, readily be disposed in other ways on the insulating part 2 as it will appear on Fig. 2.

Fig. 2 shows yet a building block 1 where an internal corner 10 is established at bearing faces 8 as well as by abutment faces 9 on the facing part 6 such that the insulating part 2 and the facing part 6 can be arranged in direct contact with each other during building of a wall construction with the shown building blocks 1. The building block 1 has a facing part 6 wherein at the back side 11 on the facing part 6 joining means in the form of recesses 12 and projections 13 are provided, which by foaming of the cellular glass in the insulating part 2 are filled by the former. Hereby is achieved good and efficient adhering/attachment between the two parts 2, 6, but also a mechanical jointing.

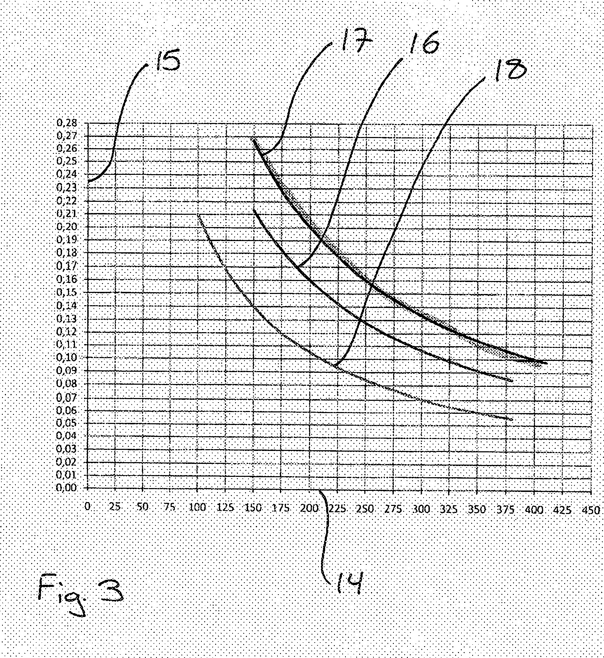

In Fig. 3 appears a diagram wherein on the X-axis 14 is indicated thickness of insulation in [mm], and on the Y-axis 15 is indicated U-value in [W/m²K] for three different materials. The three materials are shown in the form of each their curve 16, 17, 18, respectively. The curve 16 is for mineral wool with an insulating capability of 0.032 [W/mK], the curve 17 is for cellular glass with an insulating capability of 0.040 [W/mK], and the curve 18 is for Kooltherm K8 with an insulating capability of 0.021 [W/mK]. Of the three materials it is only cellular glass which has the strength or load-bearing capability such that it can be regarded as a bearing construction part. The fact that cellular glass is load-bearing entails that facing parts can be made narrower, whereby greater insulation thickness can be attained by the same wall thickness.

For example, both mineral wool 16 with a thickness of about 265 mm and cellular glass 17 with a thickness of about 330 mm have a U-value of 0.12 [W/m²K], Thus there is an immediate need for additional 65 mm insulating material when using cellular glass compared with mineral wool, which can be rock or glass wool. A typical wall with mineral wool will thus have a thickness of 2 x 11 cm for building envelope 8 and back wall 9, and 26.5 cm for mineral wool, corresponding to a total wall thickness of 48.5 cm.

A wall built with building blocks 1 according to the invention can be with building envelope and back wall with a thickness of 2 x 5.5 cm and with an insulation thickness of 33 cm, whereby this wall construction has a thickness of 44 cm. That is, a wall which is 4.5 cm less in thickness than a traditional wall with the same insulating capability. If a wall construction according to the invention is made with a thickness corresponding to a traditional wall, an insulation thickness of 37.5 cm cellular glass in total is attained, which according to the diagram in Fig. 3 provides an attractive U-value below 0.11 [W/m²K], which may even be lowered more with a better insulating capability.

Fig. 4 shows a cross-section of a part of two building blocks 1, each with an insulating part 2 and a facing part 6. The two building blocks 1 are joined by a glue joint 19, and at the edges of the facing parts are formed a projection 20 and a recess 21, respectively. The projection 20 at the lower edge of the facing part is here formed by machining of the lower bearing face 5, and the recess 21 is similarly formed by machining the upper bearing face 5. The joint 22 between facing part 6 and insulating part 2 are made of a suitable material which can handle and resist the varying thermal expansions of respective parts. Here, the projections and recesses are only shown on the longitudinal, horizontal side faces of the building blocks 1, but they may as well be formed on the abutment faces 4 and thereby in vertical direction.

In Fig. 5 only appears a cross-section of a detail, showing a wall construction that includes facing parts 6 at both sides and intermediate insulating parts 2.

## Claims

1. A combined building block/building element (1) wherein the building block (1) includes at least one insulating part (2), the insulating part (2) provided with at least two side faces (3) with a length and a height, two abutment faces (4) with a height and a width, and two bearing faces (5) with a length and a width, wherein a facing part (6) of brickwork is mounted on one or two side faces (3), and wherein the insulating part (2) is constituted by cellular glass, where at least one abutment face (4) and a bearing face (5) on the combined building block (1) are machined after formation of at least the insulating part (2), whereby one or more abutment faces (4) and/or bearing faces (5) appear with a given geometry, **characterised in that** the building block (1) comprises joining means for joining to adjacent building block(s) (1), where said joining means includes a projection (20) at at least one edge between a facing part (6) and a first bearing face (5) which has a height and a thickness and a recess (21) at at least at one edge between a facing part (6) and a second bearing face (5), which recess (21) has a height and a depth, and /or that the joining means includes a projection (20) at at least one edge between a facing part (6) and a first abutment face (4) which projection (20) has a height and a thickness and a recess (21) at at least at one edge between a facing part (6) and a second abutment face (4), which recess (21) has a height and a depth.

2. Combined building block/element (1) according to claim 1, **characterised in that** a sealant tape, e.g. and elastic sealant tape, is arranged in a recess and/or on a projection, where the sealant tape fills the joint formed between projection and recess when two building blocks are adjacently arranged.

3. Combined building block/element (1) according to any of claims 1 to 2, **characterised in that** the facing part (6) is constituted by at least one brick, wherein the at least one brick is permanently fixed to the insulating part (2) by physical engagement.

4. Combined building block/element (1) according to claim 3, **characterised in that** the facing part (6) includes a back side (11) with jointing means in the form of recesses (12) and/or projections (13), where the projections (13) are made with decreasing cross-sectional area as seen from the back side (11) and into the facing part (6), and where the recesses (12) are made with an increasing cross-sectional area as seen from the back side (11) of the facing part (6) and towards the bottom of a recess (12).

5. A method for producing a building block/element (1) according to any of claims 1 to 4, wherein the insulating part (2) of a building block (1) is provided by a method that at least includes the following steps:
- providing a mould, preferably a mould which can be opened and closed;
- arranging an adjusted amount of glass meal in the mould;
- additionally arranging an adjusted amount of foaming agent, for example chalk, carbon and/or manganese oxide, in the mould;
- placing the mould in an oven, thereby heating the mould to a temperature between 700 and 850°C, preferably to a temperature of about 750°C;
- establishing a pressure in the mould at least deviating from atmospheric pressure, preferably by at least 1%, by at least 10%, by at least 20%, by at least 40%, by at least 60%, by at least 80%, by at least 120%, by at least 200%, or more, relative to the atmospheric pressure, **characterised in that** one or more facing parts (6) are arranged in a mould at at least one side of the mould, where subsequently an insulating part (2) is foamed, the foaming of the insulating part (2) bringing the insulating part in contact with and bearing on the facing parts (6), which are thereby joined with the insulating part (2), and wherein the at least one projection(s) (20) and the at least one recess(es) (21) on the at least one edge of the bearing faces (5) of the facing part (6) or on the at least one edge of the abutment faces (4) of the facing part (6) are formed by machining of the bearing faces (5), or the abutment faces (4), respectively

6. Method according to claim 5, **characterised in that** during the heating of the mould and thereby of the glass meal and foaming agent there is supplied a gas which thereby entirely or partially fills the closed cells formed in the insulating part (2) and which is thus contained in the finished cellular glass element.

7. Method according to any of claims 5 and 6, **characterised in that** during the foaming, the mould is closed, thus enclosing the insulating part (2) of cellular glass on all sides.

8. Method according to any of claims 5 to 7, **characterised in that** at least the formed insulating part (2) of cellular glass is adapted in size and shape after formation and possibly in relation to one or more facing parts (6) that are connected with the insulating part (2).

9. Method according to any of claims 5 to 8, **characterised in that** one or more facing parts (6) are adapted in size and/or shape after joining with the insulating part (2).

10. Method according to any of claims 5 to 9, **characterised in that** in the mould, alternatively in the oven as well, there is established an underpressure relative to atmospheric pressure, wherein the underpressure is at least 1%, at least 10%, at least 20%, at least 40%, at least 60%, at least 80%, or more, lower than the atmospheric pressure.

11. Method according to any of claims 5 to 9, **characterised in that** in the mould, alternatively in the oven as well, there is established an overpressure relative to atmospheric pressure, wherein the overpressure is at least 10%, at least 20%, at least 40%, at least 60%, or at least 80%, at least 120%, at least 200%, or more, higher than the atmospheric pressure.

## Patentansprüche

1. Kombiniertes Baustein-/Bauelement (1), wobei der Baustein (1) mindestens einen isolierenden Teil (2) beinhaltet, wobei der isolierende Teil (2) mit mindestens zwei Seitenflächen (3) mit einer Länge und einer Höhe, zwei Anschlagflächen (4) mit einer Höhe und einer Breite und zwei Auflageflächen (5) mit einer Länge und einer Breite bereitgestellt ist, wobei ein Verkleidungsteil (6) des Mauerwerks an eine oder zwei Seitenflächen (3) montiert ist, und wobei der isolierende Teil (2) aus Schaumglas aufgebaut ist, wo mindestens eine Anschlagfläche (4) und eine Auflagefläche (5) auf dem kombinierten Baustein (1) nach der Bildung mindestens des isolierenden Teils (2) bearbeitet werden, wobei eine oder mehrere Anschlagflächen (4) und/oder Auflageflächen (5) in einer gegebenen Geometrie auftreten, **dadurch gekennzeichnet, dass** der Baustein (1) ein Verbindungsmittel zum Verbinden mit (einem) angrenzenden Baustein(en) (1) umfasst, wo das Verbindungsmittel einen Vorsprung (20) an mindestens einer Kante zwischen einem Verkleidungsteil (6) und einer ersten Auflagefläche (5), welche eine Höhe und eine Dicke aufweist, und eine Aussparung (21) an mindestens einer Kante zwischen einem Verkleidungsteil (6) und einer zweiten Auflagefläche (5), deren Aussparung (21) eine Höhe und eine Tiefe aufweist, beinhaltet, und/oder wobei das Verbindungsmittel einen Vorsprung (20) an mindestens einer Kante zwischen einem Verkleidungsteil (6) und einer ersten Anschlagfläche (4), deren Vorsprung (20) eine Höhe und eine Dicke aufweist, und eine Aussparung (21) an mindestens einer Kante zwischen einem Verkleidungsteil (6) und einer zweiten Anschlagfläche (4) deren Aussparung (21) eine Höhe und eine Tiefe aufweist, beinhaltet.

2. Kombiniertes Baustein-/Bauelement (1) nach Anspruch 1, **dadurch gekennzeichnet, dass** ein Dichtungsband, z.B. ein elastisches Dichtungsband, in einer Aussparung oder auf einem Vorsprung angeordnet ist, wo das Dichtungsband die Verbindung füllt, die zwischen Vorsprung und Aussparung gebildet wird, wenn zwei Bausteine angrenzend angeordnet sind.

3. Kombiniertes Baustein-/Bauelement (1) nach einem der Ansprüche 1 bis 2, **dadurch gekennzeichnet, dass** der Verkleidungsteil (6) durch mindestens einen Ziegel aufgebaut ist, wobei der mindestens eine Ziegel dauerhaft an dem isolierenden Teil (2) durch physischen Eingriff fixiert ist.

4. Kombiniertes Baustein-/Bauelement (1) nach Anspruch 3, **dadurch gekennzeichnet, dass** der Verkleidungsteil (6) eine Rückseite (11) mit einem Verbindungsmittel in der Form von Aussparungen (12) und/oder Vorsprüngen (13) beinhaltet, wo die Vorsprünge (13) mit einem, von der Rückseite (11) aus und in das Verkleidungsteil (6) gesehen, sich verringernden Querschnittbereich hergestellt sind und wo die Aussparungen (12) mit einem, von der Rückseite (11) des Verkleidungsteils (6) aus und in Richtung des Bodens der Aussparung (12) gesehen, sich vergrößernden Querschnittsbereich hergestellt sind.

5. Verfahren zum Produzieren eines Baustein-/Bauelements (1) nach einem der Ansprüche 1 bis 4, wobei der isolierende Teil (2) eines Bausteins (1) durch ein Verfahren bereitgestellt wird, das mindestens die folgenden Schritte beinhaltet:
- Bereitstellen einer Form, vorzugsweise einer Form, die geöffnet und geschlossen werden kann;
- Anordnen einer angepassten Menge von Glasmehl in der Form;
- zusätzliches Anordnen einer angepassten Menge von Schaumbildner, zum Beispiel Kreide, Kohlenstoff und/oder Manganoxid, in der Form;
- Platzieren der Form in einen Ofen, dabei Erhitzen der Form auf eine Temperatur zwischen 700 °C und 850 °C, vorzugsweise auf eine Temperatur von etwa 750 °C;
- Aufbauen eines Drucks in der Form, der mindestens von dem Atmosphärendruck abweicht, vorzugweise um mindestens 1 %, um mindestens 10 %, um mindestens 20 %, um mindestens 40 %, um mindestens 60 %, um mindestens 80 %, um mindestens 120 %, um mindestens 200 % oder mehr in Bezug auf den Atmosphärendruck, **dadurch gekennzeichnet, dass** ein oder mehrere Verkleidungsteile (6) in einer Form auf mindestens einer Seite der Form angeordnet sind, wobei anschließend ein isolierender Teil (2) geschäumt wird, wobei das Schäumen des isolierenden Teils (2) den isolierenden Teil in Berührung und in Zusammenhang mit den Verkleidungsteilen (6) bringt, welche dadurch mit dem isolierenden Teil (2) verbunden werden, und wobei der mindestens eine Vorsprung (20) und die mindestens eine Aussparung (21) auf der mindestens eine Kante der Auflagefläche (5) des Verkleidungsteils (6) oder auf der mindestens einen Kante der Anschlagfläche (4) des Verkleidungsteils (6) durch Bearbeitung der Auflageflächen (5) oder der Anschlagflächen (4) entsprechend gebildet werden.

6. Verfahren nach Anspruch 5, **dadurch gekennzeichnet, dass** während des Erhitzens der Form und damit des Glasmehls und dem Schaumbildner ein Gas zugeführt wird, das damit die geschlossenen Zellen, die in dem isolierenden Teil (2) gebildet sind, ganz oder teilweise füllt, und welches somit in dem fertigen Schaumglaselement enthalten ist.

7. Verfahren nach einem der Ansprüche 5 und 6, **dadurch gekennzeichnet, dass** die Form geschlossen ist, und somit der isolierende Teil (2) des Schaumglases an allen Seiten umschlossen ist.

8. Verfahren nach einem der Ansprüche 5 bis 7, **dadurch gekennzeichnet, dass** mindestens der gebildete isolierende Teil (2) des Schaumglases nach der Bildung in Größe und Form angepasst wird, möglicherweise in Bezug auf eine oder mehrere Verkleidungsteile (6), die mit dem isolierenden Teil (2) verbunden sind.

9. Verfahren nach einem der Ansprüche 5 bis 8, **dadurch gekennzeichnet, dass** ein oder mehrere Verkleidungsteile (6) nach dem Verbinden mit dem isolierenden Teil (2) in Größe und/oder Form angepasst werden.

10. Verfahren nach einem der Ansprüche 5 bis 9, **dadurch gekennzeichnet, dass** in der Form, alternativ auch in dem Ofen, ein Unterdruck in Bezug auf den Atmosphärendruck aufgebaut wird, wobei der Unterdruck mindestens 1 %, mindestens 10 %, mindestens 20%, mindestens 40 %, mindestens 60 %, mindestens 80 %, oder mehr unter dem Atmosphärendruck liegt.

11. Verfahren nach einem der Ansprüche 5 bis 9, **dadurch gekennzeichnet, dass** in der Form, alternativ auch in dem Ofen, ein Überdruck relativ zu dem Atmosphärendruck aufgebaut wird, wobei der Überdruck mindestens 10 %, mindestens 20 %, mindestens 40 %, mindestens 60 %, oder mindestens 80 %, mindestens 120 %, mindestens 200 % oder mehr über dem Atmosphärendruck liegt.

## Revendications

1. Bloc de construction / élément de construction combiné (1) dans lequel le bloc de construction (1) comprend au moins une partie isolante (2), la partie isolante (2) étant dotée d'au moins deux faces latérales (3) avec une longueur et une hauteur, deux faces de butée (4) avec une hauteur et une largeur, et deux faces d'appui (5) avec une longueur et une largeur, dans lequel une partie de parement (6) de briquetage est montée sur une ou deux faces latérales (3), et dans lequel la partie isolante (2) est constituée de verre cellulaire, où au moins une face de butée (4) et une face d'appui (5) sur le bloc de construction combiné (1) sont usinées après formation d'au moins la partie isolante (2), moyennant quoi une ou plusieurs faces de butée (4) et/ou faces d'appui (5) apparaissent avec une géométrie donnée, **caractérisé en ce que** le bloc de construction (1) comprend un moyen d'assemblage pour s'assembler à un(des) bloc(s) de construction adjacent(s) (1), où ledit moyen d'assemblage comprend une saillie (20) au niveau d'au moins un bord entre une partie de parement (6) et une première face d'appui (5) qui a une hauteur et une épaisseur et un évidement (21) au niveau d'au moins au niveau d'un bord entre une partie de parement (6) et une deuxième face d'appui (5), lequel évidement (21) a une hauteur et une profondeur, et/ou que le moyen d'assemblage comprend une saillie (20) au niveau d'au moins un bord entre une partie de parement (6) et une première face de butée (4) laquelle la saillie (20) a une hauteur et une épaisseur et un évidement (21) au niveau d'au moins au niveau d'un bord entre une partie de parement (6) et une deuxième face de butée (4), lequel évidement (21) a une hauteur et une profondeur.

2. Bloc / élément de construction combiné (1) selon la revendication 1, **caractérisé en ce qu'**une bande d'étanchéité, par exemple et une bande d'étanchéité élastique, est agencée dans un évidement et/ou sur une saillie, où la bande d'étanchéité remplit la jonction formée entre la saillie et l'évidement lorsque deux blocs de construction sont agencés de manière adjacente.

3. Bloc / élément de construction combiné (1) selon l'une quelconque des revendications 1 à 2, **caractérisé en ce que** la partie de parement (6) est constituée d'au moins une brique, dans lequel l'au moins une brique est fixée en permanence à la partie isolante (2) par mise en prise physique.

4. Bloc / élément de construction combiné (1) selon la revendication 3, **caractérisé en ce que** la partie de parement (6) comprend un côté arrière (11) avec des moyens de jonction sous la forme d'évidements (12) et/ou de saillies (13), où les saillies (13) sont réalisées avec une aire de section transversale décroissante telle que vue du côté arrière (11) et dans la partie de parement (6), et où les évidements (12) sont réalisés avec une aire de section transversale croissante telle que vue du côté arrière (11) de la partie de parement (6) et vers le fond d'un évidement (12).

5. Procédé de production d'un bloc / élément de construction (1) selon l'une quelconque des revendications 1 à 4, dans lequel la partie isolante (2) d'un bloc de construction (1) est fournie par un procédé qui comprend au moins les étapes suivantes :
- fourniture d'un moule, de préférence d'un moule qui peut être ouvert et fermé ;
- agencement d'une quantité ajustée de farine de verre dans le moule ;
- agencement supplémentaire d'une quantité ajustée d'agent moussant, par exemple craie, carbone et/ou oxyde de manganèse, dans le moule ;
- placement du moule dans un four, chauffage ce faisant du moule à une température entre 700 et 850 °C, de préférence à une température d'environ 750 °C ;
- établissement d'une pression dans le moule divergeant au moins de la pression atmosphérique, de préférence d'au moins 1 %, d'au moins 10 %, d'au moins 20 %, d'au moins 40 %, d'au moins 60 %, d'au moins 80 %, d'au moins 120 %, d'au moins 200 %, ou plus, par rapport à la pression atmosphérique, **caractérisé en ce qu'**une ou plusieurs parties de parement (6) sont agencées dans un moule au niveau d'au moins un côté du moule, où ensuite une partie isolante (2) est moussée, le moussage de la partie isolante (2) amenant la partie isolante en contact avec et s'appuyant sur les parties de parement (6), qui sont assemblées ce faisant à la partie isolante (2), et dans lequel la(les) au moins une saillie(s) (20) et le(les) au moins un évidement(s) (21) sur l'au moins un bord des faces d'appui (5) de la partie de parement (6) ou sur l'au moins un bord des faces de butée (4) de la partie de parement (6) sont formés par usinage des faces d'appui (5), ou des faces de butée (4), respectivement.

6. Procédé selon la revendication 5, **caractérisé en ce que** pendant le chauffage du moule et ce faisant de la farine de verre et de l'agent de moussage, il est fourni un gaz qui remplit ce faisant entièrement ou partiellement les cellules fermées formées dans la partie isolante (2) et qui est donc contenu dans l'élément de verre cellulaire fini.

7. Procédé selon l'une quelconque des revendications 5 et 6, **caractérisé en ce que** pendant le moussage, le moule est fermé, enfermant ainsi la partie isolante (2) de verre cellulaire de tous les côtés.

8. Procédé selon l'une quelconque des revendications 5 à 7, **caractérisé en ce qu'**au moins la partie isolante formée (2) de verre cellulaire est adaptée en taille et forme après formation et le cas échéant par rapport à une ou plusieurs parties de parement (6) qui sont reliées à la partie isolante (2).

9. Procédé selon l'une quelconque des revendications 5 à 8, **caractérisé en ce qu'**une ou plusieurs parties de parement (6) sont adaptées en taille et/ou forme après assemblage avec la partie isolante (2).

10. Procédé selon l'une quelconque des revendications 5 à 9, **caractérisé en ce que** dans le moule, en variante dans le four également, il est établi une sous-pression par rapport à la pression atmosphérique, dans lequel la sous-pression est d'au moins 1 %, d'au moins 10 %, d'au moins 20 %, d'au moins 40 %, d'au moins 60 %, d'au moins 80 %, ou plus, inférieure à la pression atmosphérique.

11. Procédé selon l'une quelconque des revendications 5 à 9, **caractérisé en ce que** dans le moule, en variante dans le four également, il est établi une surpression par rapport à la pression atmosphérique, dans lequel la surpression est d'au moins 10 %, d'au moins 20 %, d'au moins 40 %, d'au moins 60 %, ou d'au moins 80 %, d'au moins 120 %, d'au moins 200 %, ou plus, supérieure à la pression atmosphérique.
